# EUROPÄISCHE PATENTSCHRIFT

(11) **EP 1 732 786 B1**
(45) Veröffentlichungstag und Bekanntmachung des Hinweises auf die Patenterteilung: **09.04.2008**
(21) Anmeldenummer: 05716773.6
(22) Anmeldetag: 23.02.2005
(51) Int. Cl.: B60R 21/0136

(54) **VERFAHREN UND VORRICHTUNG ZUM ERKENNEN EINES FUSSGÄNGERAUFPRALLS**
METHOD AND DEVICE FOR THE DETECTION OF THE IMPACT OF A PEDESTRIAN
PROCEDE ET DISPOSITIF POUR IDENTIFIER L'IMPACT D'UN PIETON

(30) Priorität: 06.04.2004 DE 102004016938
(43) Veröffentlichungstag der Anmeldung: 20.12.2006
(73) Patentinhaber: VDO Automotive AG, 93055 Regensburg (DE)
(72) Erfinder: HEIMERL, Klaus, 93073 Neutraubling (DE); SCHOBER, Herbert, 93092 Barbing-Friesheim (DE); SCHÖRWERTH, Bernd, 93049 Regensburg (DE); WAHL, Heiko, 93170 Bernhardswald-Hauzendorf (DE)
(86) Internationale Anmeldenummer: PCT/EP2005/050771
(87) Internationale Veröffentlichungsnummer: WO 2005/097552

(56) Entgegenhaltungen:
- WO-A-03/082639
- DE-A1- 10 030 465
- DE-A1- 10 145 698
- GB-A- 2 376 118
- PATENT ABSTRACTS OF JAPAN Bd. 2000, Nr. 04, 31. August 2000 (2000-08-31) & JP 2000 025562 A (TOYOTA CENTRAL RES & DEV LAB INC), 25. Januar 2000 (2000-01-25)

## Beschreibung

Die vorliegende Erfindung betrifft ein Verfahren und eine Vorrichtung zur Auslösung eines Personenschutzsystems eines Fahrzeugs, wobei mittels einer Sensoreinrichtung an der Stoßstange die durch einen Aufprall verursachten Drücke und/oder Verformungen gemessen und durch ein Mittel zum Auswerten aus dem Ausgangssignal der Sensoreinrichtung ein erstes Kriterium für die Entscheidung, ob ein Fußgängeraufprall vorliegt, gebildet wird, in Abhängigkeit dessen eine erste, für sich alleine gültige, Auslöseentscheidung für ein Schutzsystem getroffen wird, wobei die tatsächliche Auslöseentscheidung von einer zweiten, für sich alleine gültigen Auslöseentscheidung abhängig ist, die aus einem zweiten Kriterium gebildet wird, das durch ein von der Sensoreinrichtung unterschiedliches physikalisches Prinzip ermittelt wird.

Verfahren zum Erkennen eines Fußgängeraufpralls auf ein Personenkraftfahrzeug sind aus dem Stand der Technik hinlänglich bekannt. Um bei einem Aufprall eines Fußgängers auf die Frontseite eines Fahrzeuges den Fußgänger gegen schwere Verletzungen zu schützen, ist es bekannt, auf der Motorhaube oder an der Windschutzscheibe ein oder mehrere Airbags vorzusehen, welche beim Aufprall des Fußgängers ausgelöst werden. Eine andere bekannte Schutzmaßnahme bei einem Fußgängeraufprall besteht darin, die Motorhaube schräg anzustellen, um den Fußgänger aufzufangen.

Die Auslösung der genannten Schutzeinrichtungen wird davon abhängig gemacht, dass der Aufprall eines Fußgängers sicher erkannt wird und von Aufprallen anderer Objekte eindeutig unterschieden werden kann. Für die Erkennung eines Fußgängeraufpralls wird z.B. die prinzipielle Kinematik des Fußgängers bei einem Aufprall auf die Vorderseite eines Personenkraftwagens ausgenutzt. In der Regel ist die erste Kontaktstelle eines Fußgängers beim Aufprall auf ein Fahrzeug die Stoßstange. Deshalb befindet sich eine Sensoreinrichtung, die auf Krafteinwirkung oder Verformung reagiert, an der Stoßstange des Fahrzeuges. Durch den Kontakt mit der Stoßstange erhält der Fußgänger einen Rotationsimpuls, der ihn auf die Motorhaube schleudert.

Ein zuverlässiger Schutz des Fußgängers ist jedoch nur dann gewährleistet, wenn die Sensoreinrichtung und das ihr nachgeschaltete Mittel zum Auswerten der von der Sensoreinrichtung gelieferten Signale zuverlässig arbeiten. Ein Fehler der Sensoreinrichtung oder des Mittels zum Auswerten der Sensorsignale könnte zu einem versehentlichen Auslösen des Schutzsystemes führen, so dass dieses seine Schutzfunktion nicht mehr wahrnehmen könnte.

Die DE 100 30 465 A1, die die Merkmale des Oberbegriffs der Ansprüche 1 und 4 zeigt, offenbart ein gattungsbildendes Verfahren und eine Vorrichtung zum Erkennen eines Fußgängeraufpralls, bei dem ein erster Aufprallsensor in der Stoßstange und ein zweiter Aufprallsensor an der Motorhaube des Fahrzeugs angeordnet sind, die bei einem Fußgängeraufprall in zeitlichem Abstand Signale erzeugen. Es wird durch einen Geschwindigkeitssensor die Geschwindigkeit vor dem Aufprall auf den Stoßstangenaufprallsensor und die Geschwindigkeit nach dem Aufprall auf den Motorhaubenaufprallsensor ermittelt und die Differenz dieser Geschwindigkeitswerte mit einem vorgegebenen Wert verglichen, um ein Auslöseentscheidungskriterium zu erhalten. Es werden also beide Geschwindigkeitswerte von einem Sensor geliefert, so dass bei einer Fehlfunktion des Geschwindigkeitssensors falsche Werte vorliegen, ohne dass dies bemerkt würde.

Die Aufgabe der vorliegenden Erfindung ist es daher, ein Verfahren sowie eine Vorrichtung der eingangs genannten Art anzugeben, welche auf einfache Weise eine möglichst hohe Zuverlässigkeit des Schutzsystems gewährleisten.

Diese Aufgabe wird mit den Merkmalen der unabhängigen Patentansprüche gelöst. Vorteilhafte Ausgestaltungen der Erfindung ergeben sich jeweils aus den abhängigen Patentansprüchen.

Die Sicherheit des eingangs beschriebenen Fußgängerschutzsystems kann mit Vorteil dadurch erhöht werden, dass das zweite Kriterium aus einer Bewertung zwischen einem ersten und einem zweiten Geschwindigkeitswert resultiert, wobei der erste Geschwindigkeitswert durch einen von der Sensoreinrichtung unabhängigen Sensor ermittelt wird und der zweite Geschwindigkeitswert durch das Mittel zum Auswerten aus dem von der Sensoreinrichtung abgegebenen Ausgangssignal errechnet wird.

Zu diesem Zweck weist die erfindungsgemäße Vorrichtung zur Auslösung eines Personenschutzsystems eines Fahrzeugs eine Auswerteeinheit auf, die dazu eingerichtet ist, ein von einem Sensor geliefertes Signal und ein von dem Mittel zum Auswerten errechneten Wert zu verarbeiten, um daraus das zweite Kriterium für die Entscheidung, ob ein Fußgängeraufprall vorliegt, zu bilden, in Abhängigkeit dessen dann eine weitere Auslöseentscheidung für das Schutzsystem getroffen wird, wobei für den Fußgängeraufprall entschieden wird, wenn sowohl das erste als auch das zweite Entscheidungskriterium erfüllt sind.

Dadurch, dass neben dem ersten bekannten Entscheidungskriterium noch ein weiteres, zweites Entscheidungskriterium auf der Basis eines anderen physikalischen Prinzips ermittelt wurde, und die Entscheidung von beiden Entscheidungskriterien abhängig gemacht wird, kann mit hoher Zuverlässigkeit verhindert werden, dass das Schutzsystem aufgrund eines Fehlers in der Sensoreinrichtung oder dem nachgeschalteten Mittel zum Auswerten ausgelöst wird.

Erfindungsgemäß resultiert das zweite Kriterium aus einer Bewertung zwischen einem ersten und einem zweiten Geschwindigkeitswert. Der erste Geschwindigkeitswert wird dabei durch einen von der Sensoreinrichtung unabhängigen Sensor ermittelt. Hierzu kann in vorteilhafter Weise derjenige Geschwindigkeitssensor herangezogen werden, dessen Signale zur Darstellung der Fahrzeuggeschwindigkeit in dem Fahrzeug ausgewertet werden. Dies bedeutet mit anderen Worten, dass der von der Sensoreinrichtung unabhängige Sensor kein zusätzliches Bauteil darstellt, sondern ein ohnehin in jedem Kraftfahrzeug vorhandener Sensor verwendet werden kann. Das von dem Sensor abgegebene Signal liegt üblicherweise auf einem Bus zur weiteren Auswertung an und kann für die Verarbeitung durch die Auswerteeinheit herangezogen werden.

Der zweite Geschwindigkeitswert könnte durch einen weiteren Geschwindigkeitswert bereitgestellt werden. Besonders vorteilhaft ist es jedoch, wenn der zweite Geschwindigkeitswert durch das Mittel zum Auswerten aus dem von der Sensoreinrichtung abgegebenen Ausgangssignal errechnet wird. Der Begriff des "Ausgangssignals" umfasst dabei auch mehrere Signalwerte eines physikalischen Werts oder mehrerer physikalischer Werte. Diese Vorgehensweise ermöglicht den Verzicht auf zusätzliche, ebenfalls fehlerbehaftete, Bauelemente.

Besonders bevorzugt ist es dabei, wenn zum Errechnen des zweiten Geschwindigkeitswertes die von dem Mittel zum Auswerten ermittelte oder gemessene Intrusionsgeschwindigkeit des Kollisionsobjektes herangezogen wird. Die Ermittlung der Intrusionsgeschwindigkeit ist durch den Einsatz von Sensoreinrichtungen möglich, die dazu eingerichtet sind, den zeitlichen Verlauf der Kollision zu erfassen und an das Mittel zum Auswerten zu übertragen. Bevorzugt kommen als Sensoreinrichtungen hierbei faseroptische Sensoren mit druckabhängiger oder deformationsabhängiger Lichtübertragungscharakteristik oder eine Vielzahl an längs der Stoßstange zueinander beabstandeten Drucksensoren in Betracht. Neben diesen explizit aufgeführten Sensortypen sind natürlich all diejenigen Sensoreinrichtungen einsetzbar, mit welchen aus den von der Sensoreinrichtung übertragenen Signalen die Errechnung oder Messung der Intrusionsgeschwindigkeit möglich ist.

Gemäß einer Ausgestaltung der Erfindung umfasst das Bewerten des ersten und des zweiten Geschwindigkeitswerts die Überprüfung, ob der zweite Geschwindigkeitswert in einem um den ersten Geschwindigkeitswert liegenden Toleranzbereich liegt. Das Bewerten des ersten und zweiten Geschwindigkeitswerts stellt damit nicht lediglich einen Vergleich des errechneten mit dem gemessenen Wert dar. Vielmehr wird um den von dem von Sensor ermittelten ersten Geschwindigkeitswert ein vorher, z.B. durch Versuche ermittelter, Toleranzbereich gelegt. Dies ermöglicht im Falle einer Kollision die Berücksichtigung der sich schnell ändernden Fahrzeuggeschwindigkeit, die z.B. durch starkes Bremsen des Fahrzeuges verursacht sein kann. Die Größe des Toleranzbereiches ist abhängig von der Aktualisierungsrate des Sensors, der den ersten Geschwindigkeitswert als Signal abgibt. Dabei gilt, je größer die Abstände zwischen der Aktualisierung der Signalwerte sind, desto größer muss der Toleranzbereich gewählt werden.

Zweckmäßigerweise ist das Mittel zum Auswerten dazu eingerichtet, aus dem von der Sensoreinrichtung gelieferten Ausgangssignal die Intrusionsgeschwindigkeit des Kollisionsobjektes zu ermitteln, um aus dieser die Fahrzeuggeschwindigkeit zu ermitteln und als zweiten Geschwindigkeitswert an die Auswerteeineinheit zu übertragen.

Die Erfindung kann somit darin gesehen werden, die Zuverlässigkeit eines Fußgängerschutzsystems dadurch zu erhöhen, dass für die Entscheidung, ob das Schutzsystem ausgelöst wird, zwei Kriterien erfüllt sein müssen. Das erste Kriterium wird durch die Sensoreinrichtung und das ihr nachgeschaltete Mittel zum Auswerten ermittelt. Auf welche Weise das Mittel zum Auswerten zu seinem Ergebnis, ob ein Fußgängeraufprall vorliegt, kommt, d.h. welche Signale (Druck, Verformung, Beschleunigung, Intrusionsgeschwindigkeit, Impuls, Deformationsarbeit, usw.) herangezogen werden, ist dabei unerheblich. Das zweite Kriterium wird nach einem anderen physikalischen Prinzip ermittelt. Im vorliegenden Fall geschieht dies bevorzugt durch die Bewertung zweier Geschwindigkeitswerte, wovon das eine aufgrund eines Messwertes und das andere aufgrund einer Berechnung durch das Mittel zum Auswerten bereitgestellt wird.

Weitere Merkmale, Vorteile und Ausgestaltungen der Erfindung werden nachfolgend anhand der Figuren näher erläutert. Es zeigen:
- Figur 1: ein Blockschaltbild einer Vorrichtung zum Erkennen eines Fußgängeraufpralls und
- Figur 2: ein Ablaufdiagramm des Verfahrens zum Erkennen eines Fußgängeraufpralls.

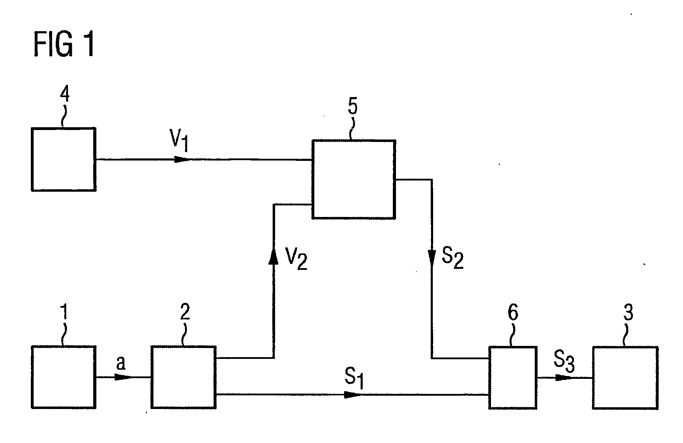

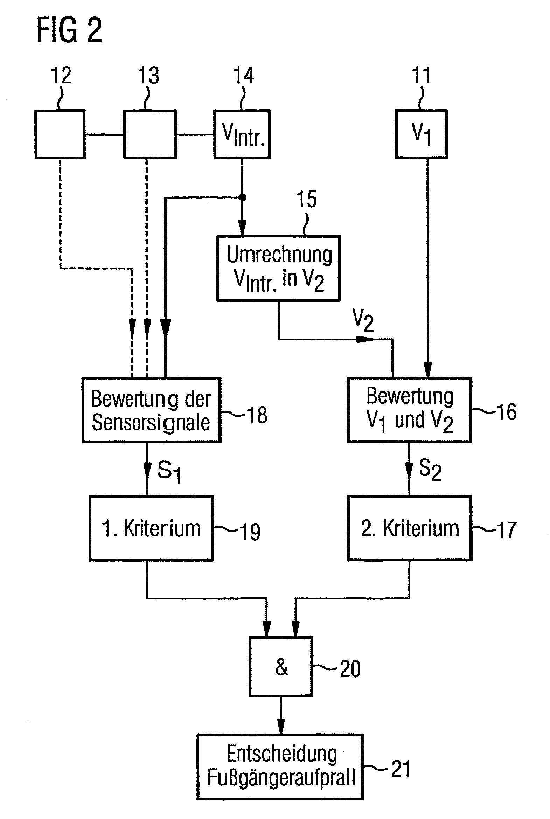

In der Figur 1 ist ein Blockschaltbild einer Vorrichtung und in Figur 2 ein Ablaufdiagramm eines Verfahrens, mit dem ein Fußgängeraufprall erkannt werden kann, dargestellt. Mit dem Bezugszeichen 1 ist eine Sensoreinrichtung bezeichnet, die prinzipiell beliebig ausgestaltet sein kann, jedoch dazu eingerichtet sein muss, den zeitlichen Verlauf einer Kollision zu erfassen und ein entsprechendes Signal oder entsprechende Signale a an ein Mittel 2 zum Auswerten zu übertragen. Bei der Sensoreinrichtung kann es sich beispielsweise um einen faseroptischen Sensor mit druckabhängiger oder deformationsabhängiger Lichtübertragungscharakteristik handeln. Derartige Sensoren sind aus dem Stand der Technik hinlänglich bekannt, so dass auf eine genauere Beschreibung verzichtet werden kann. Denkbar ist auch, die Sensoreinrichtung 1 durch eine Vielzahl an längs einer Stoßstange des Kraftfahrzeuges zueinander beabstandeten Drucksensoren auszubilden, so dass der erforderliche zeitliche Verlauf einer Kollision detektierbar ist. Auch solche Sensoreinrichtungen sind aus dem Stand der Technik bekannt. Das Mittel 2 zum Auswerten errechnet aus dem oder den von der Sensoreinrichtung übertragenen Signal oder Signalen, ob eine Kollision mit einem Fußgänger oder einem anderen Objekt, z.B. einem Stein, einem Ball oder einem anderen Kraftfahrzeug, vorliegt. Ergibt die Bewertung, dass es sich bei den kollidierenden Objekt um einen Fußgänger handelt, so wird ein Signal s₁, das die Information zum Auslösen eines Schutzsystems 3 trägt, an eine Logikeinheit 6 übermittelt. Die in dem Signal s₁ codierte Information führt jedoch alleine noch nicht zu einem Auslösen des Schutzsystems 3.

Um eine Fehlauslösung des Schutzsystems 3, z.B. aufgrund einer fehlerhaften Sensoreinrichtung oder eines Fehlers in dem Mittel 2 zum Auswerten zu verhindern, muss die Entscheidung zur Auslösung durch eine Auswerteeinheit 5 "bestätigt" werden. Die Auswerteeinheit 5 ist mit dem Mittel 2 zum Auswerten verbunden und empfängt von diesem einen Geschwindigkeitswert v₂. Der Geschwindigkeitswert v₂ repräsentiert eine errechnete Fahrzeuggeschwindigkeit. Die Berechnung erfolgt innerhalb des Mittels 2 zum Auswerten aus der Intrusionsgeschwindigkeit, mit der das kollidierende Objekt in den Stoßfänger des Fahrzeuges eindringt. Die Intrusionsgeschwindigkeit kann aus den von der Sensoreinrichtung 1 übermittelten Signalen a errechnet oder direkt gemessen worden sein. Die Ermittlung der Intrusionsgeschwindigkeit erfolgt abhängig von dem verwendeten Sensor. Da dies aus dem Stand der Technik bekannt ist, wird auf eine detaillierte Beschreibung an dieser Stelle verzichtet.

Die Auswerteeinheit 5 und die Logikeinheit 6 können beispielsweise in einem gemeinsamen Steuergerät ausgebildet sein.

Die durch die Auswerteeinheit 5 zu treffende Entscheidung, ob ein Fußgängeraufprall vorliegt, erfolgt durch die Bewertung des errechneten Geschwindigkeitswerts v₂ mit einem von einem Sensor 4 gemessenen Geschwindigkeitswert v₁. Bei dem Sensor 4 kann es sich um den in jedem Fahrzeug vorhandenen Geschwindigkeitssensor handeln, der z.B. über einen Bus (denkbar ist der derzeit gebräuchliche CAN-Bus) an eine (in der Figur nicht dargestellte) Recheneinheit einen Geschwindigkeitswert überträgt, der dann auf dem Tachometer zur Anzeige gebracht wird.

Die Bewertung der beiden Geschwindigkeitswerte erfolgt derart, dass um den gemessenen Geschwindigkeitswert v₁ ein Toleranzbereich gelegt wird, der vorzugsweise symmetrisch um den gemessenen Geschwindigkeitswert v₁ streut. Die Breite des Toleranzbereiches bemisst sich danach, mit welcher Aktualisierungsrate gemessene Geschwindigkeitswerte v₁ an die Auswerteeinheit 5 übertragen werden. Je größer der Abstand zwischen zwei aktualisierten Geschwindigkeitswerten v₁ ist, desto größer muss der Toleranzbereich ausgelegt werden. Die Entscheidung, dass ein Fußgängeraufprall vorliegt, ist nämlich nur dann positiv, wenn der errechnete Geschwindigkeitswert v₂ innerhalb dieses Toleranzbereiches liegt. Durch den Toleranzbereich wird somit verhindert, dass durch einen starken Bremsvorgang und einem eventuell noch nicht aktualisierten Geschwindigkeitswert v₁ auf "kein Fußgängeraufprall" entschieden wird, obwohl in Wirklichkeit ein solcher vorliegt.

Das Ergebnis der Bewertung wird durch die Auswerteeinheit 5 an die Logikeinheit 6 übertragen (Signal s₂). Nur wenn die Signale s₁, s₂ übereinstimmen auf "Fußgängeraufprall" gesetzt sind, wird von der Logikeinheit 6 ein Signal s₃ an das Schutzsystem 3 übertragen, wodurch dieses ausgelöst wird. Welche Art von Schutzsystem dabei zum Einsatz kommt, ist für die Erfindung von nachrangiger Bedeutung.

Das Ablaufdiagramm der Figur 2 verdeutlicht den beschriebenen Vorgang in einer anderen Darstellung. Durch die Sensoreinrichtung 1 werden verschiedene Eingangsgrößen (Sensorsignale) 12,13 ermittelt. Aus diesen kann das Mittel 2 zum Auswerten als weitere Eingangsgröße 14 eine Intrusionsgeschwindigkeit v_{Intr} ermitteln. Die Intrusionsgeschwindigkeit v_{Intr} kann auch eine direkte Eingangsgröße darstellen, wenn diese durch die Sensoreinrichtung unmittelbar gemessen werden kann. Sowohl die nicht näher bezeichneten Eingangsgrößen 12,13 als auch die Eingangsgröße 14 können von dem Mittel 2 zum Auswerten dazu herangezogen werden, eine Entscheidung zu treffen, ob ein Fußgängeraufprall vorliegt (Bezugszeichen 18). Ergebnis der Bewertung 18 ist ein erstes Kriterium 19, das einer UND-Verknüpfung 20 zugeführt wird. Die als Eingangsgröße 14 ermittelte Intrusionsgeschwindigkeit v_{Intr} wird in dem mit dem Bezugszeichen gekennzeichneten Schritt 15 in eine Geschwindigkeit v₂ umgerechnet. Der errechnete Geschwindigkeitswert v₂ und ein gemessener Geschwindigkeitswert v₁ (Bezugszeichen 11) werden im Schritt 16 einer Bewertung unterzogen. Ergebnis dieser Bewertung ist ein zweites Kriterium (Bezugszeichen 17), das ebenfalls der UND-Verknüpfung 20 zugeführt wird. Nur in dem Fall, in dem sowohl das erste als auch das zweite Kriterium einem Fußgängeraufprall entsprechen, wird im Schritt 21 ein Signal ausgegeben, so dass ein Schutzsystem aktiviert werden kann.

## Patentansprüche

1. Verfahren zur Auslösung eines Personenschutzsystems eines Fahrzeugs, wobei mittels einer Sensoreinrichtung (1) an der Stoßstange die durch einen Aufprall verursachten Drücke und/oder Verformungen gemessen und durch ein Mittel (2) zum Auswerten aus dem Ausgangssignal (a) der Sensoreinrichtung (1) ein erstes Kriterium (19) für die Entscheidung, ob ein Fußgängeraufprall vorliegt, gebildet wird, in Abhängigkeit dessen eine erste, für sich alleine gültige, Auslöseentscheidung (s1) für ein Schutzsystem (3) getroffen wird, wobei die tatsächliche Auslöseentscheidung (s3) von einer zweiten, für sich alleine gültigen Auslöseentscheidung (s2) abhängig ist, die aus einem zweiten Kriterium gebildet wird, das durch ein von der Sensoreinrichtung (1) unterschiedliches physikalisches Prinzip ermittelt wird,
**dadurch gekennzeichnet, dass**
das zweite Kriterium (17) aus einer Bewertung zwischen einem ersten und einem zweiten Geschwindigkeitswert (v₁,v₂) resultiert, wobei der erste Geschwindigkeitswert (v₁) durch einen von der Sensoreinrichtung (1) unabhängigen Sensor (4) ermittelt wird und der zweite Geschwindigkeitswert (v₂) durch das Mittel (2) zum Auswerten aus dem von der Sensoreinrichtung (1) abgegebenen Ausgangssignal errechnet wird.

2. Verfahren nach Anspruch 1,
**dadurch gekennzeichnet, dass**
zum Errechnen des zweiten Geschwindigkeitswerts (v₂) die von dem Mittel (2) zum Auswerten ermittelte Intrusionsgeschwindigkeit (v_{Intr}) des Kollisionsobjekts herangezogen wird.

3. Verfahren nach einem der Ansprüche 1 oder 2,
**dadurch gekennzeichnet, dass**
das Bewerten des ersten und des zweiten Geschwindigkeitswerts (v₁,v₂) die Überprüfung umfasst, ob der zweite Geschwindigkeitswert (v₂) in einem um den ersten Geschwindigkeitswert (v₁) liegenden Toleranzbereich liegt.

4. Vorrichtung zur Auslösung eines Personenschutzsystems eines Fahrzeugs, die zur Messung der durch einen Aufprall verursachten Drücke und/oder Verformungen zumindest eine Sensoreinrichtung (1) an der Stoßstange und die ein Mittel (2) zum Auswerten des von der Sensoreinrichtung (1) gelieferten Ausgangssignals (a) aufweist, um aus dem Ausgangssignal (a) ein erstes Kriterium für die Entscheidung, ob ein Fußgängeraufprall vorliegt, zu bilden, in Abhängigkeit dessen eine erste, für sich alleine gültige Auslöseentscheidung für ein Schutzsystem (3) getroffen wird, wobei eine Auswerteeinheit (5) vorgesehen ist, die dazu eingerichtet ist, ein von einem Sensor (4) geliefertes Signal und ein von dem Mittel (2) zum Auswerten errechneten Wert zu verarbeiten, um daraus ein zweites Kriterium für die Entscheidung, ob ein Fußgängeraufprall vorliegt, zu bilden, in Abhängigkeit dessen eine zweite, für sich alleine gültige Auslöseentscheidung für ein Schutzsystem (3) getroffen wird, wobei eine Entscheidungseinheit (6) vorgesehen ist, die mit dem Mittel (2) zum Auswerten und der Auswerteeinheit (6) gekoppelt ist und dazu eingerichtet ist, ein tatsächliches Auslösesignal (s3) für das Schutzsystem (3) abzugeben, wenn die erste und die zweite Auslöseentscheidung übereinstimmend einem Aufprall entsprechen,
**dadurch gekennzeichnet, dass**
die Sensoreinrichtung (1) dazu eingerichtet ist, den zeitlichen Verlauf der Kollision zu erfassen und an das Mittel (2) zum Auswerten zu übertragen, das dazu eingerichtet ist, aus dem von der Sensoreinrichtung (1) gelieferten Ausgangssignal die Intrusionsgeschwindigkeit des Kollisionsobjekts zu ermitteln, um aus dieser die Fahrzeuggeschwindigkeit zu ermitteln und als zweiten Geschwindigkeitswert (v₂) an die Auswerteeinheit (5) zu übertragen.

5. Vorrichtung nach Anspruch 4,
**dadurch gekennzeichnet, dass**
der Sensor (4) ein Geschwindigkeitssensor ist, dessen Signal als erster Geschwindigkeitswert (v₁) über einen Bus übertragbar und zur Anzeige der Fahrzeuggeschwindigkeit in dem Fahrzeug vorgesehen ist.

6. Vorrichtung nach einem der Ansprüche 4 oder 5,
**dadurch gekennzeichnet, dass**
die Sensoreinrichtung (1) durch einen faseroptischen Sensor mit druckabhängiger Lichtübertragungscharakteristik oder eine Vielzahl an längs der Stoßstange zueinander beabstandeten Drucksensoren gebildet ist.

## Claims

1. Method for activating a person protection system in a vehicle, with a sensor device (1) on the fender being used to measure the pressures and/or deformations caused by an impact and an evaluation means (2) being used to form a first criterion (19) from the output signal (a) of the sensor device (1) for deciding whether pedestrian impact has occurred, as a function of which a first, valid alone per se, activation decision (s1) is made for a protection system (3), with the actual activation decision (s3) being a function of a second, valid alone per se, activation decision (s2), which is formed from a second criterion, which is determined by means of a physical principle that is different from the sensor device (1),
**characterised in that**
the second criterion (17) results from an assessment of a first against a second speed value (v₁,v₂), with the first speed value (v₁) being determined by a sensor (4) that is independent of the sensor device (1) and the second speed value (v₂) being calculated by the evaluation means (2) from the output signal emitted by the sensor device (1).

2. Method according to claim 1,
**characterised in that**
the intrusion speed (v_{Intr}) of the collision object determined by the evaluation means (2) is used to calculate the second speed value (v₂).

3. Method according to one of claims 1 or 2,
**characterised in that**
the assessment of the first against the second speed value (v₁,v₂) includes verification of whether the second speed value (v₂) is within a tolerance range around the first speed value (v₁).

4. Device for activating a person protection system in a motor vehicle, which has at least one sensor device (1) on the fender to measure the pressures and/or deformations caused by an impact and which has means (2) for evaluating the output signal (a) supplied by the sensor device (1), to form a first criterion for deciding whether pedestrian impact has occurred from the output signal (a), as a function of which a first, valid alone per se, activation decision is made for a protection system (3), with an evaluation unit (5) being provided, which is set up to process a signal supplied by a sensor (4) and a value calculated by the evaluation means (2), in order to form a second criterion from these for deciding whether pedestrian impact has occurred, as a function of which a second, valid alone per se, activation decision is made for a protection system (3), with a decision unit (6) being provided, which is linked to the evaluation means (2) and the evaluation unit (6) and is set up to emit an actual activation signal (s3) for the protection system (3), if the first and second activation decisions both correspond to an impact,
**characterised in that**
the sensor device (1) is set up to detect the temporal pattern of the collision and transmit it to the evaluation means (2), which is set up to determine the intrusion speed of the collision object from the output signal supplied by the sensor device (1), in order to determine the vehicle speed from this and transmit it as the second speed value (v₂) to the evaluation unit (5).

5. Device according to claim 4,
**characterised in that**
the sensor (4) is a speed sensor, the signal of which can be transmitted as the first speed value (v₁) via a bus and is provided to display the vehicle speed in the vehicle.

6. Device according to one of claims 4 or 5,
**characterised in that**
the sensor device (1) is formed by a fibre-optic sensor with pressure-dependent light transmission characteristics or a plurality of pressure sensors at intervals along the fender.

## Revendications

1. Procédé de déclenchement d'un système de protection de personnes d'un véhicule, les pressions et/ou déformations générées par une collision étant mesurées par un système de capteurs (1) au niveau du pare-chocs, et un premier critère (19), décidant s'il s'agit d'une collision avec un piéton, est formé par un moyen d'évaluation (2) à partir du signal de sortie (a) du système de capteurs (1), en fonction duquel critère est prise une première décision de déclenchement (s1), valable pour elle seule, pour un système de protection (3), la décision de déclenchement effective (s3) dépendant d'une deuxième décision de déclenchement (s2), valable pour elle seule, laquelle est formée à partir d'un deuxième critère, qui est déterminé par un principe physique différent du système de capteurs (1),
**caractérisé en ce que** le deuxième critère (17) résulte d'une évaluation d'une première et d'une deuxième valeur de vitesses (v₁, v₂), la première valeur de vitesse (v₁) étant déterminée par un capteur (4) indépendant du système de capteurs (1) et la deuxième valeur de vitesse (v₂) étant calculée par le moyen d'évaluation (2) à partir du signal de sortie délivré par le système de capteurs (1).

2. Procédé selon la revendication 1, **caractérisé en ce que** la vitesse d'intrusion (vᵢₙₜᵣ) de l'objet de collision, déterminée par le moyen d'évaluation (2), est prise en compte pour calculer la deuxième valeur de vitesse (v₂).

3. Procédé selon la revendication 1 ou 2, **caractérisé en ce que** l'évaluation de la première et de la deuxième valeur de vitesses (v₁, v₂) consiste à vérifier si la deuxième valeur de vitesse (v₂) se situe dans une plage de tolérances située autour de la première valeur de vitesse (v₁).

4. Dispositif de déclenchement d'un système de protection de personnes d'un véhicule, qui comporte au moins un système de capteurs (1) au niveau du pare-chocs destiné à mesurer les pressions et/ou déformations générées par une collision et qui comporte un moyen d'évaluation (2) du signal de sortie (a) délivré par le système de capteurs (1), afin de former à partir du signal de sortie (a) un premier critère (19) décidant s'il s'agit d'une collision avec un piéton, en fonction duquel critère est prise une première décision de déclenchement, valable pour elle seule, pour un système de protection (3), une unité d'analyse (5) étant prévue, laquelle est conçue pour traiter un signal délivré par un capteur (4) et une valeur calculée par le moyen d'évaluation (2), afin de former à partir de celle-ci un deuxième critère décidant s'il s'agit d'une collision avec un piéton, en fonction duquel critère est prise une deuxième décision de déclenchement, valable pour elle seule, pour un système de protection (3), une unité de décision (6) étant prévue, laquelle est couplée au moyen d'évaluation (2) et à l'unité d'analyse (6) et est conçue pour délivrer un signal de déclenchement effectif (s3) pour le système de protection (3) lorsque la première et la deuxième décision de déclenchement correspondent de manière concordante à une collision,
**caractérisé en ce que** le système de capteurs (1) est conçu pour détecter l'évolution dans le temps de la collision et la transmettre au moyen d'évaluation (2), lequel est conçu pour calculer, à partir du signal de sortie délivré par le système de capteurs (1), la vitesse d'intrusion de l'objet de collision, afin de calculer à partir de celle-ci la vitesse du véhicule et de la transmettre à l'unité d'analyse (5) en tant que deuxième valeur de vitesse (v₂).

5. Dispositif selon la revendication 4, **caractérisé en ce que** le capteur (4) est un capteur de vitesse, dont le signal peut être transmis via un bus sous forme de première valeur de vitesse (v₁) et est prévu pour afficher la vitesse du véhicule dans le véhicule.

6. Dispositif selon la revendication 4 ou 5, **caractérisé en ce que** le système de capteurs (1) est formé par un capteur à fibre optique avec une caractéristique de transmission de lumière en fonction d'une pression ou par une pluralité de capteurs de pression situés à distance les uns des autres le long du pare-chocs.
